# FASCICULE DE BREVET EUROPEEN

(11) **EP 0 630 495 B1**
(45) Date de publication et mention de la délivrance du brevet: **03.07.1996**
(21) Numéro de dépôt: 93920552.2
(22) Date de dépôt: 18.03.1993
(51) Int. Cl.: G05G 19/00, F16H 63/04, B60K 23/02, F16D 43/26

(54) **DISPOSITIF D'ACTIONNEMENT D'UN SYSTEME TEL QU'UN EMBRAYAGE OU UNE BOITE DE VITESSE**
BETÄTIGUNGSVORRICHTUNG FÜR Z.B.KUPPLUNGS- ODER GETRIEBEEINHEIT
DEVICE FOR ACTUATING A CLUTCH OR A GEAR BOX OR THE LIKE

(30) Priorité: 20.03.1992 FR 9203377
(43) Date de publication de la demande: 28.12.1994
(73) Titulaire: CRASSET, Dominique, F-95230 Soisy-sous-Montmorency (FR)
(72) Inventeur: CRASSET, Dominique, F-95230 Soisy-sous-Montmorency (FR)
(74) Mandataire: Bloch, Gérard
(86) Numéro de dépôt international: FR9300272
(87) Numéro de publication internationale: WO9319411

(56) Documents cités:
- DE-B- 1 006 456
- FR-A- 559 683
- FR-A- 877 118
- FR-A- 1 110 019
- US-A- 3 071 021

## Description

La présente invention concerne un dispositif d'actionnement d'un système tel qu'un embrayage ou une boîte de vitesse associé à un moteur, notamment d'automobile, et du type comprenant des moyens de commande et un organe d'actionnement.

Il existe actuellement divers type de boîtes de vitesse mécaniques avec ou sans embrayage automatique, et des boîtes de vitesse automatiques.

On connaît également des boîtes de vitesse mécanique dans lesquelles aussi bien le passage des vitesses que l'embrayage sont asservis. De tels asservissements impliquent des systèmes hydrauliques ou électriques complexes et donc onéreux et de maintenance difficile et en conséquence pratiquement réservés jusqu'à présent aux véhicules de compétition.

La présente invention vise notamment à fournir un dispositif permettant d'offrir une assistance à la conduite d'un véhicule automobile qui soit simple et relativement bon marché, et permettant plus particulièrement d'assister les manoeuvres de changement de vitesse et d'embrayage.

On connait par le document FR-A-877 118 un dispositif d'actionnement d'un système tel qu'un embrayage ou une boîte de vitesse associé à un moteur, notamment d'automobile, et comprenant des moyens de commande et un organe d'actionnement, et comportant en outre :
- un premier arbre entraîné en rotation par le moteur,
- un deuxième arbre solidaire de l'organe d'actionnement,
- des moyens d'accouplement pour accoupler le deuxième arbre au premier arbre sous l'action des moyens de commande,
- des moyens pour désaccoupler le deuxième arbre du premier arbre après une rotation du deuxième arbre d'un angle prédéterminé et
- des moyens de rappel pour ramener le deuxième arbre à sa position initiale après son désaccouplement du premier arbre.

Plus particulièrement, les moyens d'accouplement sont constitués d'un embrayage à friction comportant des organes de friction dont les uns sont agencés pour être entraînés par le premier arbre et les autres sont susceptibles d'entraîner le deuxième arbre.

Les organes de friction sont coaxiaux au premier arbre, les premiers organes de friction étant solidaires en rotation du premier arbre et les deuxièmes organes de friction étant solidaires en rotation d'un organe de support lui-même solidaire en rotation d'un pignon denté engrenant avec un secteur denté solidaire en rotation du deuxième arbre.

Il s'agit donc d'un dispositif mécanique dont la source d'énergie est constituée par le moteur lui-même. La prise d'énergie peut bien entendu être située au niveau de l'arbre de sortie du moteur ou plus en aval, par exemple sur l'arbre de sortie de la boîte de vitesse. L'organe de commande est ici réalisé sous la forme d'une pédale.

Ce dispositif fonctionne par conséquent comme un amplificateur mécanique de l'effort exercé par l'utilisateur.

Il présente toutefois l'inconvénient que l'utilisateur doit faire durer son action jusqu'à la fin du cycle de fonctionnement, à défaut de quoi ce cycle est interrompu et le fonctionnement du dispositif et des organes qu'il commande est perturbé.

La présente invention vise à pallier cet inconvénient.

A cet effet, elle a pour objet un dispositif du type mentionné ci-dessus, caractérisé par le fait qu'il comprend des moyens pour maintenir accouplés lesdits moyens d'accouplement tant que le deuxième arbre n'a pas effectué ladite rotation de l'angle prédéterminé.

Ainsi, le cycle se termine dans tous les cas, même si l'utilisateur interrompt son action.

Plus particulièrement, les moyens de maintien peuvent comprendre une came et un suiveur de came, la rotation du premier arbre provoquant, par coopération de la came et du suiveur de came, dans un premier temps, l'accouplement du deuxième arbre au premier arbre et leur maintien accouplés, puis, dans un deuxième temps, après ladite rotation de l'angle prédéterminé, leur désaccouplement.

Dans un mode de réalisation particulier, les moyens de désaccouplement comprennent deux organes de désaccouplement, l'un des organes de désaccouplement comportant une came telle qu'une rainure et l'autre organe de désaccouplement portant un suiveur de came tel qu'un doigt apte à se déplacer dans la rainure, et l'un des organes de désaccouplement étant solidaire d'un boîtier du dispositif et l'autre organe de désaccouplement étant agencé pour être déplacé dans une première direction par un mouvement du deuxième arbre, le déplacement de cet organe dans la première direction provoquant, par coopération du suiveur de came et de la came, son déplacement dans une deuxième direction lequel provoque le désaccouplement du deuxième arbre d'avec le premier arbre.

La rotation du deuxième arbre entraîne par conséquent positivement le désaccouplement du premier et du deuxième arbre par coopération du doigt et de la rainure précités.

Plus particulièrement, l'organe de désaccouplement non solidaire du boîtier peut être solidaire en translation axiale de l'organe de support.

Dans un mode de réalisation particulier, on prévoit des moyens d'inhibition pour inhiber les moyens de rappel tant que la vitesse de rotation du premier arbre est inférieure à un seuil prédéterminé.

Dans le cas où le dispositif est prévu comme une assistance à l'embrayage, un tel agencement permet d'utiliser le dispositif non seulement lors des changements de vitesse mais également lors du démarrage.

Les moyens d'inhibition peuvent comprendre des moyens de pression pour maintenir en pression les organes de friction, et au moins une masselote pour repousser les moyens de pression lorsque la vitesse de rotation du premier arbre dépasse le seuil prédéterminé.

Plus particulièrement, les moyens de maintien peuvent comprendre une came agencée pour coopérer avec un doigt suiveur de came solidaire d'un des organes de friction, la came étant sollicitée par des moyens élastiques dans le sens d'un maintien en contact des organes de friction et les masselotes agissant sur la came contre l'action des moyens élastiques.

Avantageusement, les moyens de commande comprennent des moyens élastiques agencés pour commander le dispositif lorsqu'ils sont libérés par un utilisateur, et pour être réarmés par le dispositif au cours de son cycle de fonctionnement.

On peut ainsi disposer d'une force de commande supérieure à celle que l'utilisateur est susceptible de fournir.

On décrira maintenant à titre d'exemple non limitatif des modes de réalisation particulier de l'invention en référence aux dessins annexés dans lesquels :
- la figure 1 est une vue en coupe axiale d'un dispositif selon l'invention,

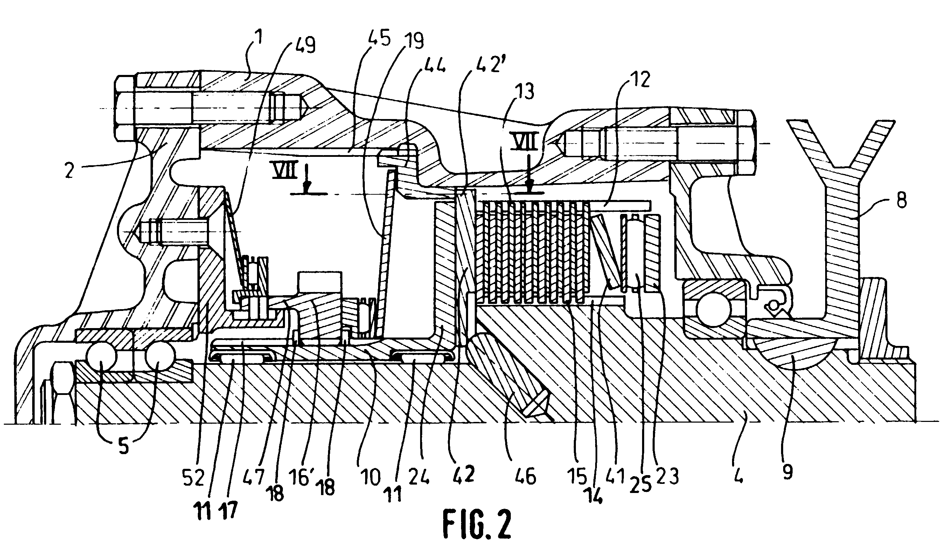

- la figure 2 est une vue à plus grande échelle de la partie supérieure de la figure 1,
- la figure 3 est une vue en coupe axiale de l'organe de commande du dispositif de la figure 1,
- la figure 4 est une vue en coupe selon la ligne IV-IV de la figure 3,
- la figure 5 est une vue à encore à plus grande échelle d'un détail de la figure 2,
- la figure 6 est une vue développée en coupe selon la ligne VI-VI de la figure 5,
- la figure 7a est une vue en coupe selon la ligne VII-VII de la figure 2,
- la figure 7b est une vue similaire à la figure 7a dans une autre position des organes représentés,
- les figures 8a et 8b illustrent l'actionnement d'une boîte de vitesse et d'un embrayage à l'aide d'un dispositif selon l'invention, et
- la figure 9 représente un autre mode de réalisation des organes de commandes.

Le dispositif comporte tout d'abord un boîtier 1, fermé par deux flasques d'extrémité 2 et 3.

Un premier arbre 4 est monté dans le boîtier 1 sur des roulements 5 et un deuxième arbre 6 est également monté dans le boîtier sur des roulements 7.

Une poulie 8 est montée à l'extérieur du boîtier sur le premier arbre 4, auquel elle est liée en rotation par une clavette 9.

Le premier arbre 4 porte également, à l'intérieur du boîtier 1, un organe porte disque 10, monté tournant sur l'arbre 4 par l'intermédiaire de roulements 11.

Le porte disque 10 comporte de façon connue une partie cylindrique comportant une rainure 12 dans laquelle sont engagées des saillies de disques de friction 13 pour solidariser en rotation les disques 13 et le porte disque 10.

De même, l'arbre 4 comporte une rainure 14, dans laquelle sont engagées des saillies de disques de friction 15 intercalés avec les disques 13, pour solidariser en rotation les disques 15 et l'arbre 4. L'arbre 4, le porte disque 10 et les disques 13 et 15 sont, par conséquent, coaxiaux.

Un pignon 16 à denture droite est monté sur le porte disque 10, solidaire de ce dernier en rotation grâce à des canelures 17 et en translation grâce à des circlips 18.

Une rondelle élastique 19 en appui d'une part sur le boîtier 1, et d'autre part sur le pignon 16 par l'intermédiaire d'un roulement 20, repousse le pignon 16 et par conséquent le porte disque 10 vers la gauche.

Un plateau de pression 23 permet de serrer les disques de friction en les pressant contre un plateau 24 formant le fond de la partie cylindrique du porte disque 10, par l'intermédiaire d'un roulement 25.

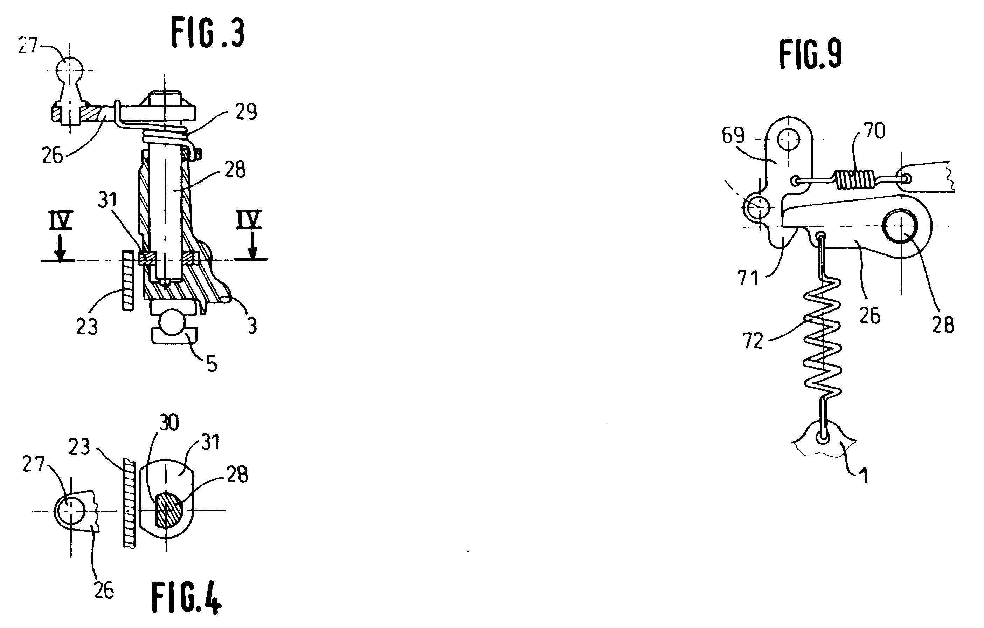

Si l'on se réfère maintenant aux figures 3 et 4, on voit un levier de commande 26 relié à des moyens de commande représentés pàr une rotule 27, et solidaire d'un axe de commande 28 ramené en position neutre par rapport au flasque 3 par un ressort 29.

La partie de l'axe 28 opposée au levier 26 forme un méplat 30 permettant de solidariser en rotation l'arbre 28 et un excentrique 31 lequel, lorsque l'arbre 28 est entraîné en rotation, presse le plateau de pression 23 de manière à provoquer un serrage des disques 13 et 15.

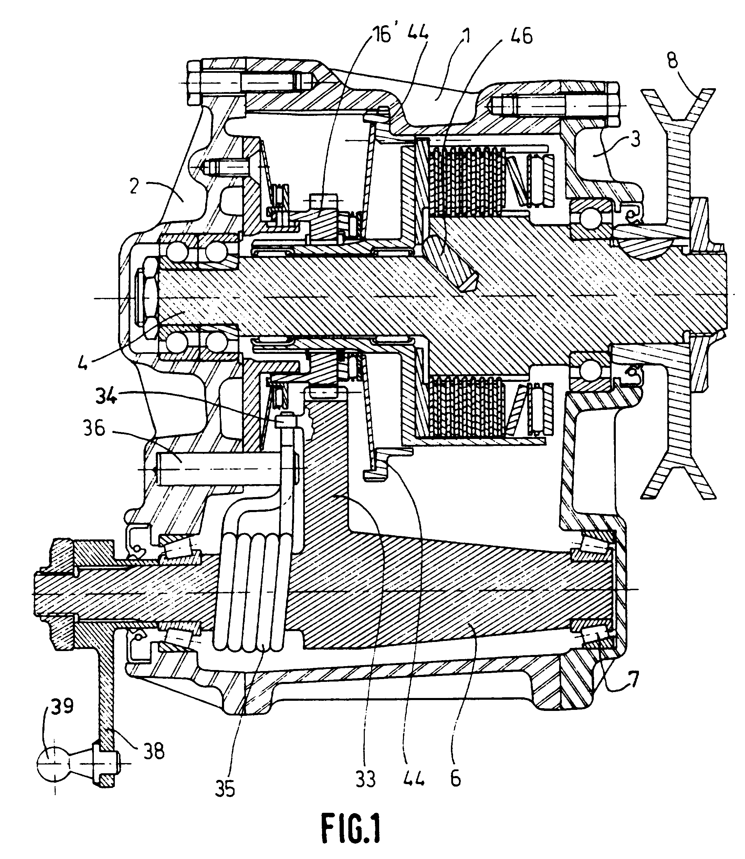

Si l'on revient maintenant à la figure 1, on voit que le deuxième arbre 6 est solidaire d'un secteur denté 33 à denture droite coopérant avec la denture du pignon 16.

Le secteur 33 forme une saillie 34 sur laquelle prend appui une extrémité d'un ressort en épingle 35 dont l'autre extrémité est en appui sur une tige 36 montée dans le flasque 2.

L'extrémité de l'arbre 6 dépassant du flasque 2 supporte et est solidaire en rotation d'un levier d'actionnement 38 relié par l'intermédiaire d'une rotule 39 à l'organe non représenté, que l'on souhaite actionner.

Le plateau de pression 23 assure le serrage des disques 13, 15 par l'intermédiaire d'une rondelle élastique 41. Ce serrage s'effectue contre le plateau 24 du porte disque 10 par l'intermédiaire d'un plateau intermédiaire 42 dont un doigt 42' en saillie à sa périphérie extérieure traverse la rainure 12 pour coopérer avec une rampe 43 d'une couronne 44 coulissant dans le boîtier 1 grâce à des canelures 45. Les rampes 43 sont agencées de telle sorte qu'une rotation du porte disque 10 et du plateau intermédiaire 42 à partir de leur position de repos provoque sur la couronne 44 un effort vers la gauche contre l'action de la rondelle élastique 19.

Des masselotes 46 engagées dans des conduits de l'arbre 4 ont également tendance à repousser le plateau intermédiaire 42 vers la gauche contre l'action de la rondelle élastique 19, lorsque l'arbre 4 est entraîné en rotation.

Le pignon 16 porte une saillie 47 supportant un doigt cylindrique 48.

Une autre rondelle élastique 49 repousse le pignon 16 vers la droite par l'intermédiaire d'une couronne de pression 50 et d'un roulement 51, contre l'action de la rondelle élastique 19.

Un organe 52 solidaire du flasque 2 comporte une rainure 53 formant une piste fermée dans laquelle se déplace l'extrémité libre du doigt 48.

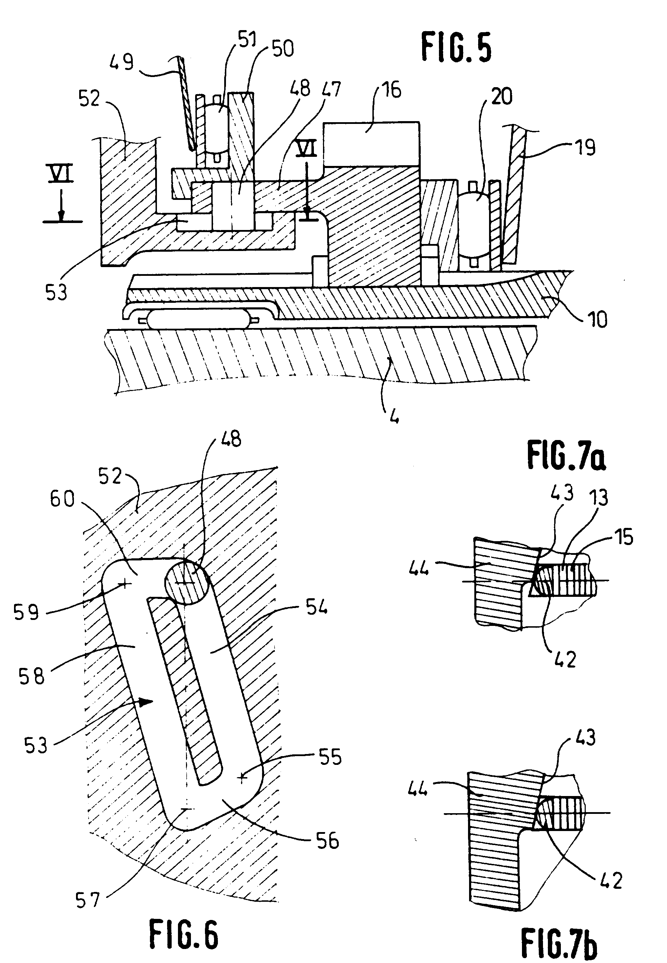

Le doigt 48 est représenté à la figure 6 dans la position de repos où le pignon 16 est en équilibre entre les actions des rondelles élastiques 19 et 49.

A partir de cette position, la piste 53 comporte une première partie 54 inclinée à la fois par rapport à la direction axiale et par rapport de la direction tangentielle jusqu'à une position 55 du doigt 48, puis une deuxième partie 56 inclinée dans le même sens que la partie 54 par rapport à la direction tangentielle mais en sens opposé par rapport à la direction axiale jusqu'à une position 57 située axialement au même niveau que la position de départ, puis une troisième partie 58 parallèle à la partie 54 et reliant la position 57 à une position 59 située au même niveau que la position de départ dans la direction tangentielle, et enfin une quatrième partie axiale 60 reliant la position 59 à la position de départ. La piste 53 a donc sensiblement la forme d'un trapèze rectangle avec un angle droit en position 55, et des parties 54 et 56 s'étendant par rapport aux positions neutres axialement 48 et 57 vers la droite de l'organe 52 et des parties 58 et 60 s'étendant vers la gauche de ces positions neutres axialement.

La poulie 8 est entraînée en rotation, par exemple, par le moteur auquel est associée une boîte de vitesse que l'on souhaite commander à l'aide du dispositif. Toutefois, cette poulie 8 peut également être entraînée par l'arbre de sortie de cette même boite de vitesse, ou par ces deux organes simultanément par l'intermédiaire d'un train différentiel.

En fonctionnement, le premier arbre 4 est par conséquent entraîné en permanence en rotation. Tant que le levier de commande 26 n'est pas actionné, les disques 15 sont entraînés en rotation par l'arbre 4 mais les disques 13 demeurent fixes ainsi par conséquent que le porte disque 10, le pignon 16 et l'arbre 6.

Lorsque l'utilisateur donne une impulsion sur le levier de commande 26, il fait pivoter l'axe 28, l'excentrique 31 vient exercer une force axiale sur le plateau de pression 23 qui vient serrer les disques 13, 15 entraînant par conséquent une rotation du porte disque 10 et du pignon 16 qui entraîne lui-même l'arbre 6 par l'intermédiaire du secteur denté 33.

Lors du début de cette rotation du pignon 16, le doigt 48 se déplace dans la partie 54 de la piste 53 depuis sa position de départ jusqu'à la position 55 ce qui entraîne un déplacement vers la droite du pignon 16 et du porte disque 10 et par conséquent un auto-serrage de l'embrayage constitué par les disques 13 et 15. L'embrayage est ainsi serré entre le porte disque 10 et l'excentrique 31 sous l'action de la rondelle élastique 41.

Puis, toujours sous l'effet du couple de l'embrayage, le doigt 48 se déplace dans la partie 56 de la piste 53 ramenant ainsi le porte disque vers la gauche et libérant l'embrayage de toute pression. Le ressort en épingle 35 ramène alors l'arbre 6 dans sa position de départ, celui-ci ramenant à son tour le pignon 16 de sorte que le doigt 48 parcourt la partie 58 de la piste 53 et arrive en position 59. La rondelle élastique 49 peut alors agir et ramène le doigt 48 à sa position de départ.

Bien entendu, le levier d'actionnement 38 a effectué l'action voulue pendant la course du doigt dans les parties 54 et 56 de la piste 53 puis est revenu à sa position de départ. L'angle dont a tourné l'arbre 6 correspond à l'écart angulaire entre la position de départ et la position 57 du doigt 48, au facteur de démultiplication prés.

Ce dispositif est asservi à la vitesse de rotation de l'arbre 4.

En effet, lorsque le doigt 48 se déplace dans la partie 56 de la piste 53 et arrive à proximité de la position 57, le doigt 42 du plateau intermédiaire 41 monte sur la rampe 43 de la couronne 44 comprimant ainsi la rondelle élastique 19 et produisant sur l'embrayage un effort axial qui maintien le doigt 48 en position 57, la force de compression de l'embrayage dûe à la rondelle 19 entraînant un couple dans cet embrayage supérieur à celui du ressort 35.

Sous l'effet d'une élévation de la vitesse de rotation de l'arbre 4, les masselotes 46 fournissent un effort opposé à celui de la rondelle élastique 19 suffisant pour soulager l'embrayage de l'effort axial dû à cette rondelle 19. Puis les ressorts 35 et 49 ramènent le doigt en position 59 et en position de départ comme décrit précédemment.

Il suffit par conséquent d'une simple impulsion de l'utilisateur pour déclencher l'actionnement souhaité, du fait de l'auto-serrage de l'embrayage. Le cycle s'effectue ensuite automatiquement.

De plus, du fait de l'asservissement en vitesse, ce dispositif est bien adapté à la commande d'un embrayage.

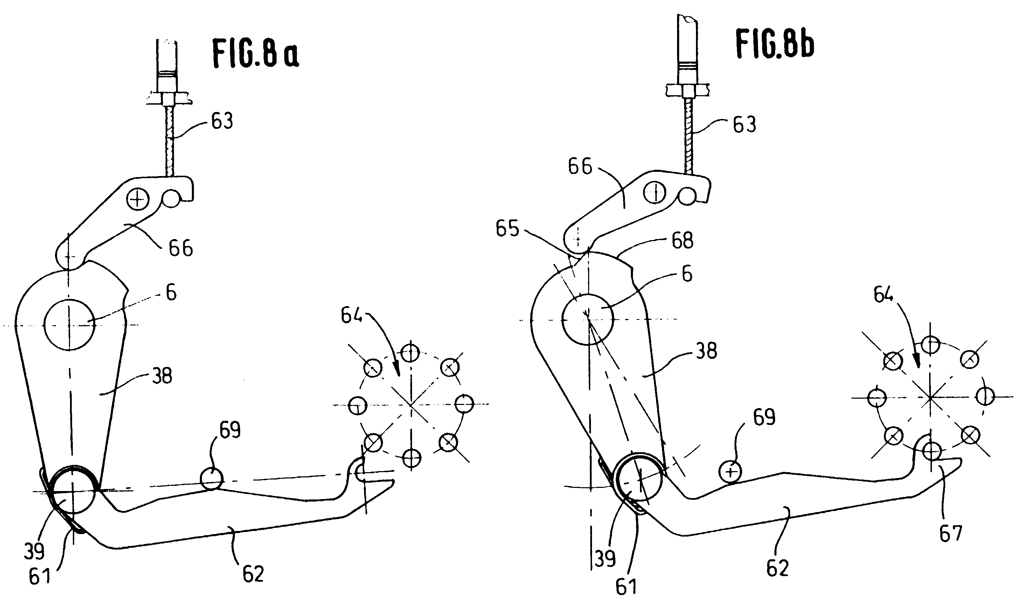

Les figures 8 illustrent une utilisation du dispositif pour la commande d'un embrayage et d'une boîte de vitesse.

Le levier 38 commande ici le câble d'embrayage 63 et la rotule 39 commande, par l'intermédiaire du levier à fourche 62, le barillet de sélection 64 de la boîte de vitesse de la même manière que dans les motocycles. Le levier 62 est pressé par un ressort en épingle 61 contre une butée 69.

Le levier 38 forme une came 65 coopérant avec un suiveur de came formé par un autre levier 66 auquel est relié le câble 63 pour provoquer un débrayage.

Pendant la course de débrayage du levier 38, un jeu entre le levier 62 et le barillet de sélection 64 permet le débrayage, après quoi le barillet est entraîné par la fourche 67 du levier 62 tandis que le levier suiveur de came 66 progresse sur une partie neutre 68 du levier 38.

Lorsque l'arbre 6 revient à sa position de départ, la fourche 67 est dégagée du barillet de sélection 64 et le levier suiveur de came 66 redescend la surface de came 65 réembrayant le moteur.

La figure 9 représente une variante des moyens de commande dans laquelle la commande agit sur un levier 69 contre l'action d'un ressort 70. Le levier 69 forme un crochet 71 coopérant avec un rebord du levier de commande 26 qui est ici maintenu en appui sur le crochet 71 par un ressort 72, relié au boîtier 1.

Lorsque l'utilisateur fait pivoter le levier 69, le levier de commande 26 échappe au bec du crochet 71 et le levier 26 est entraîné en rotation par le ressort 72, entraînant à son tour l'axe de commande 28 et provoquant l'action désirée.

Lorsque le plateau de pression 23 ramène l'excentrique 31 dans sa position de départ, le levier 26 est lui-même ramené contre l'action du ressort 72 et se réenclenche dans le crochet 71 du levier 69 grâce au ressort 70.

L'invention a été décrite en référence à la boite de vitesse et à l'embrayage d'un véhicule automobile mais d'autres applications, notamment des applications fixes, sont bien entendu envisageables.

Par ailleurs, dans le cas où les efforts à exercer seraient très importants, il est possible de mettre en série deux dispositifs selon l'invention, l'arbre de sortie 6 du premier dispositif constituant l'arbre de commande 28 du second.

On a par ailleurs décrit ici un embrayage à friction constitué par un embrayage à disque mais un embrayage à cônes ou un embrayage hydrodynamique pourrait également être utilisé.

On notera enfin que la commande du dispositif selon l'invention peut aisément être automatisée à partir de paramètres relevés sur le véhicule, celui-ci se comportant alors comme un véhicule à boîte automatique.

## Revendications

1. Dispositif d'actionnement d'un système tel qu'un embrayage ou une boite de vitesse associé à un moteur, notamment d'automobile, et comprenant des moyens de commande (26-31) et un organe d'actionnement (38), et comportant en outre :
- un premier arbre (4) entraîné en rotation par le moteur ;
- un deuxième arbre (6) solidaire de l'organe d'actionnement ;
- des moyens d'accouplement (10,13,15,16,33) pour accoupler le deuxième arbre au premier arbre sous l'action des moyens de commande ;
- des moyens (48,53) pour désaccoupler le deuxième arbre du premier arbre après une rotation du deuxième arbre d'un angle prédéterminé ; et
- des moyens de rappel (35) pour ramener le deuxième arbre à sa position initiale après son désaccouplement du premier arbre ;
caractérisé par le fait qu'il comprend des moyens (48,53) pour maintenir accouplés lesdits moyens d'accouplement tant que le deuxième arbre n'a pas effectué ladite rotation de l'angle prédéterminé.

2. Dispositif selon la revendication 1, dans lequel les moyens de maintien comprennent une came (53) et un suiveur de came (48), la rotation du deuxième arbre provoquant, par coopération de la came et du suiveur de came, dans un premier temps, l'accouplement du deuxième arbre au premier arbre et leur maintien accouplés, puis, dans un deuxième temps, après ladite rotation d'un angle prédéterminé, leur désaccouplement.

3. Dispositif selon l'une quelconque des revendications 1 et 2, dans lequel les moyens de désaccouplement comprennent deux organes (47,52) de désaccouplement, l'un des organes de désaccouplement (52) comportant une came (53) et l'autre organe de désaccouplement (47) portant un suiveur de came (48) apte à se déplacer sur la came, et l'un des organes de désaccouplement (52) étant solidaire d'un boîtier (1) du dispositif et l'autre organe de désaccouplement (47) étant agencé pour être déplacé dans une première direction par un mouvement de rotation du deuxième arbre, le déplacement de cet organe dans la première direction provoquant, par coopération du suiveur de came et de la came, son déplacement dans une deuxième direction lequel provoque le désaccouplement du deuxième arbre d'avec le premier arbre.

4. Dispositif selon l'une quelconque des revendications 2 et 3, dans lequel la came est une rainure et le suiveur de came est un doigt engagé dans ladite rainure.

5. Dispositif selon l'une quelconque des revendications 2 à 4, dans lequel les deux organes de friction sont coaxiaux au premier arbre, le premier organe de friction étant solidaire en rotation du premier arbre et le deuxième organe de friction étant solidaire en rotation d'un organe de support (10) lui-même solidaire en rotation d'un pignon denté (16) engrenant avec un secteur denté (33) solidaire en rotation du deuxième arbre, et dans lequel l'organe de désaccouplement (47) non solidaire du boîtier est solidaire en translation axiale de l'organe de support (10).

6. Dispositif selon l'une quelconque des revendications 1 à 5, comprenant des moyens d'inhibition (19,42-46) pour inhiber les moyens de rappel tant que la vitesse de rotation du premier arbre est inférieure à un seuil prédéterminé.

7. Dispositif selon la revendication 6, dans lequel les moyens d'accouplement comprennent un embrayage à friction comportant au moins deux organes de friction (13, 15) dont l'un (15) est agencé pour être entraîné par le premier arbre et l'autre (13) est susceptible d'entraîner le deuxième arbre, et dans lequel les moyens d'inhibition comprennent des moyens de presssion (19) pour maintenir en pression les organes de friction, et au moins une masselote (46) pour repousser les moyens de pression lorsque la vitesse de rotation du premier arbre dépasse le seuil prédéterminé.

8. Dispositif selon la revendication 7, dans lequel les moyens de maintien comprennent une came (43) agencée pour coopérer avec un doigt (42) suiveur de came solidaire d'un des organes de friction, la came étant sollicitée par des moyens élastiques (19) dans le sens d'un maintien en contact des organes de friction et les masselotes agissant sur la came contre l'action des moyens élastiques.

9. Dispositif selon l'une quelconque des revendications 1 à 8, dans lequel les moyens de commande comprennent des moyens élastiques (72) agencés pour commander le dispositif lorsqu'ils sont libérés par l'utilisateur, et pour être réarmés par le dispositif au cours de son cycle de fonctionnement.

## Patentansprüche

1. Betätigungsvorrichtung für ein System wie eine ausrückbare Kupplung oder ein Getriebegehäuse, verbunden mit einem Motor, vor allem eines Kraftfahrzeugs, und einer Betätigungseinrichtung (26-31) und ein Betätigungsorgan (38) aufweisend sowie ferner:
- eine erste Welle (4), die durch den Motor in Drehung versetzt ist;
- eine zweite Welle (6), die mit dem Betätigungsorgan fest verbunden ist;
- eine Kupplungseinrichtung (10, 13, 15, 16, 33) zum Kuppeln der zweiten Welle an die erste Welle unter der Einwirkung der Betätigungseinrichtung;
- eine Einrichtung (48, 53) zum Entkuppeln der zweiten Welle von der ersten Welle nach einer Drehung der zweiten Welle um einen vorbestimmten Winkel; und
- eine Rückstelleinrichtung (35) zum Rückführen der zweiten Welle in ihre Anfangsstellung nach ihrem Entkuppeln von der ersten Welle;
dadurch gekennzeichnet, daß sie eine Einrichtung (48, 53) aufweist, um die Kupplungseinrichtung so lange gekuppelt zu halten, wie die zweite Welle die Drehung um den vorbestimmten Winkel nicht ausgeführt hat.

2. Vorrichtung nach Anspruch 1,
dadurch gekennzeichnet,
daß die Halteeinrichtung einen Nocken (53) und eine Nachführeinrichtung des Nockens (48) aufweist, wobei die Drehung der zweiten Welle durch das Zusammenwirken des Nockens mit der Nachführeinrichtung des Nockens in einem ersten Arbeitstakt das Kuppeln der zweiten Welle an die erste Welle und die Beibehaltung ihres gekuppelten Zustands, ferner in einem zweiten Arbeitstakt nach der Drehung um einen vorbestimmten Winkel ihr Entkuppeln bewirkt.

3. Vorrichtung nach Anspruch 1 oder 2,
dadurch gekennzeichnet,
daß die Entkupplungseinrichtung zwei Entkupplungsorgane (47, 52) aufweist, wobei das eine der Entkupplungsorgane (52) einen Nocken (53) aufweist und das andere Entkupplungsorgan (47) eine Nachführeinrichtung des Nockens (48) trägt, die geeignet ist, sich auf dem Nocken zu verlagern, und wobei das eine der Entkupplungsorgane (52) mit einem Gehäuse (1) der Vorrichtung fest verbunden ist und das andere Entkupplungsorgan (47) so ausgelegt ist, um in eine erste Richtung mittels einer Drehbewegung der zweiten Welle verlagert zu werden, wobei die Verlagerung dieses Organs in die erste Richtung durch das Zusammenwirken der Nachführeinrichtung des Nockens mit dem Nocken seine Verlagerung in eine zweite Richtung bewirkt, die das Entkuppeln der zweiten Welle von der ersten Welle bewirkt.

4. Vorrichtung nach Anspruch 2 oder 3,
dadurch gekennzeichnet,
daß der Nocken eine Nut und die Nachführeinrichtung des Nockens ein in der Nut eingerückter Finger ist.

5. Vorrichtung nach einem der Ansprüche 2 bis 4,
dadurch gekennzeichnet,
daß die beiden Reiborgane koaxial zur ersten Welle verlaufen, wobei das erste Reiborgan drehfest mit der ersten Welle und das zweite Reiborgan drehfest mit einem Trägerorgan (10) verbunden sind, welches selbst drehfest mit einem Zahnritzel (16) verbunden ist, das mit einem Zahnsegment (33) im Eingriff steht, das drehfest mit der zweiten Welle verbunden ist, und daß das Entkupplungsorgan (47), das mit dem Gehäuse nicht fest verbunden ist, mit dem Trägerorgan (10) so verbunden ist, daß es gegen diesen nicht axial verschiebbar ist.

6. Vorrichtung nach einem der Ansprüche 1 bis 5,
dadurch gekennzeichnet,
daß sie eine Hemmeinrichtung (19, 42-46) aufweist, um die Rückstelleinrichtung so lange zu hemmen, wie die Drehzahl der ersten Welle unter einer vorbestimmten Schwelle liegt.

7. Vorrichtung nach Anspruch 6,
dadurch gekennzeichnet,
daß die Kupplungseinrichtung eine Reibungskupplung aufweist, die mindestens zwei Reiborgane (13, 15) aufweist, von denen das eine (15) so ausgelegt ist, um mittels der ersten Welle angetrieben zu werden, und das andere (13) geeignet ist, die zweite Welle anzutreiben, und daß die Hemmeinrichtung eine Druckeinrichtung (19) aufweist, um die Reiborgane unter Druck zu halten, sowie mindestens einen Steiger (46), um die Druckeinrichtung zurückzudrücken, wenn die Drehzahl der ersten Welle die vorbestimmte Schwelle übersteigt.

8. Vorrichtung nach Anspruch 7,
dadurch gekennzeichnet,
daß die Halteeinrichtung einen Nocken (43) aufweist, der so ausgelegt ist, um mit einem Nachführfinger (42) des Nockens, der mit einem der Reiborgane fest verbunden ist, zusammenzuwirken, wobei der Nocken mittels elastischer Mittel (19) in der Richtung zur Beibehaltung des Kontaktes der Reiborgane und der Steiger beansprucht wird, welche auf den Nocken gegen die Wirkung der elastischen Mittel wirken.

9. Vorrichtung nach einem der Ansprüche 1 bis 8,
dadurch gekennzeichnet,
daß die Betätigungseinrichtung elastische Mittel (72) aufweist, die so ausgelegt sind, um die Vorrichtung zu betätigen, wenn sie vom Benutzer freigegeben sind, und von der Vorrichtung während ihres Funktionszyklus rückgestellt zu werden.

## Claims

1. Device for actuating a system such as a clutch or a gearbox associated with an engine, particularly a motor vehicle engine, and comprising control means (26-31) and an actuation member (38), and further comprising:
- a first shaft (4) rotationally driven by the engine;
- a second shaft (6) integral with the actuation member;
- coupling means (10, 13, 13, 16, 33) for coupling the second shaft to the first shaft under the action of the control means;
- means (48, 53) for uncoupling the second shaft from the first shaft after the second shaft has rotated through a predetermined angle; and
- return means (35) for returning the second shaft to its initial position after it has been uncoupled from the first shaft;
characterised in that it comprises means (48, 53) for keeping the said coupling means coupled for as long as the second shaft has not rotated through the said predetermined angle.

2. Device according to Claim 1, in which the holding means comprise a cam (53) and a cam follower (48), the rotation of the second shaft giving rise, by interaction of the cam and of the cam follower, in a first instance, to the second shaft being coupled to the first shaft and their being kept coupled, then, in a second instance, after the said rotation through a predetermined angle, their uncoupling.

3. Device according to either one of Claims 1 and 2, in which the uncoupling means comprise two uncoupling members (47, 52), one of the uncoupling members (52) comprising a cam (53) and the other uncoupling member (47) carrying a cam follower (48) able to move over the cam, and one of the uncoupling members (52) being integral with a casing (1) of the device and the other uncoupling member (47) being arranged so as to be displaced in a first direction by a rotational movement of the second shaft, the displacement of this member in the first direction giving rise, by interaction of the cam follower and of the cam, to its displacement in a second direction, which gives rise to the uncoupling of the second shaft from the first shaft.

4. Device according to either one of Claims 2 and 3, in which the cam is a groove and the cam follower is a finger engaged in the said groove.

5. Device according to any one of Claims 2 to 4, in which the two friction members are coaxial with the first shaft, the first friction member being rotationally integral with the first shaft and the second friction member being rotationally integral with a support member (10) itself rotationally integral with a cogged gear (16) meshing with a toothed sector (33) rotationally integral with the second shaft, and in which the uncoupling member (47) which is not integral with the casing is integral, in axial translation, with the support member (10).

6. Device according to any one of Claims 1 to 5, comprising inhibition means (19, 42-46) for inhibiting the return means for as long as the rotational speed of the first shaft is lower than a predetermined threshold.

7. Device according to Claim 6, in which the coupling means comprise a friction clutch comprising at least two friction members (13, 15) one (15) of which is arranged to be driven by the first shaft and the other (13) is capable of driving the second shaft, and in which the inhibition means comprise pressure means (19) for keeping the friction members under pressure, and at least one flyweight (46) for pushing the pressure means back when the rotational speed of the first shaft exceeds the predetermined threshold.

8. Device according to Claim 7, in which the holding means comprise a cam (43) arranged to interact with a cam follower finger (42) integral with one of the friction members, the cam being stressed by elastic means (39) in the direction of keeping the friction members in contact, and the flyweights acting on the cam against the action of the elastic means.

9. Device according to any one of Claims 1 to 8, in which the control means comprise elastic means (72) arranged to control the device when they are released by the user, and to be reset by the device during its operational cycle.
